# EUROPEAN PATENT APPLICATION

(11) **EP 2 511 537 A1**
(43) Date of publication of application: **17.10.2012**
(21) Application number: 12163670.8
(22) Date of filing: 11.04.2012
(51) Int. Cl.: F16B 1/02, F16B 21/06, F16B 5/06

(54) **Snap-on locking means**

(30) Priority: 14.04.2011 FI 20115363
(71) Applicant: Konetehdas K&K Oy, 00370 Helsinki (FI)
(72) Inventor: Karaslahti, Ari, FI-02920 ESPOO (FI)
(74) Representative: Heinänen, Pekka Antero

(57) **Abstract**

Snap-on locking means (1), for fixing a desired object (A) by snap-on locking to the frame part (2) of the snap-on locking means and either directly or indirectly and that a first frame part (2) comprising fixing apertures (5) is plate-like, and that the snap-on locking means comprises a second plate-like frame part (3) that can be fixed to the first frame part, which second frame part comprises fixing studs (8) that can rest, at least in the locking position, in the fixing apertures (5) of the first frame part, and that a pressable locking part (4) with spring action, such as a lever, moving in an essentially orthogonal direction against the plane of the frame part is fitted to the frame part, with which locking part relative movement between the first and the second frame part (2, 3) can be prevented and/or enabled.

## Description

### Background of the invention

The object of the invention is a snap-on locking means as defined in the preamble of claim 1, with which snap-on locking means a desired object can be fixed by snap-on locking to the frame of the snap-on locking means.

### Prior art solutions

Known in the art are certain solutions for snap-on locking means, with which some object can be fixed by snap-on locking to the frame of a snap-on locking means by the aid of the snap-on locking means, which object can be transferred or in some other way used while it is fixed to the snap-on locking means.

Solutions for snap-on locking means according to prior art have certain drawbacks. In prior-art solutions snap-on locking usually occurs by using carbine hooks or corresponding, which can be fitted to the frame of the snap-on locking means and/or directly to the object to be fixed, and use of the carbine hooks is awkward and slow because there are usually a number of them on the snap-on locking means. The use of solutions known in the art using only one hand is awkward or even impossible.

Prior-art solutions are not reliable in use, and they are not durable or safe, especially when fixing heavy objects with snap-on locking.

The purpose of this invention is to achieve a new type of solution for a snap-on locking means, with which it is possible to avoid the problems occurring in prior-art solutions.

### Brief description of the invention

The solution according to the invention is characterized by what is disclosed in the characterization part of the independent claim 1. Additionally, the solution according to the invention is characterized by what is disclosed in the dependent claims 2-7.

The solution according to the invention now being presented has some significant advantages when it is compared to solutions that are known and used.

In the solution according to the invention carbine hooks, or corresponding, are not needed, and in the solution according to the invention the locking position can be released using only one hand.

Another advantage of the arrangement is that it is durable, operationally reliable, and the fabrication of it is simple, and it can be widely used for the snap-on locking of different objects.

### Brief description of the figures

In the following, the invention will be described in more detail by the aid some examples of its embodiment with reference to the drawings 1-2b, wherein,
Fig. 1 presents a perspective sketch of a snap-on locking means according to the invention.
Fig. 1b presents a rear view of a snap-on locking means, in the locking position.
Fig. 1c presents a front view of a snap-on locking means, in the locking position.
Fig. 2a presents a section view from the point B-B of Fig. 1c.
Fig. 2b presents a section view from the point A-A of Fig. 1c.

### Detailed description of the invention

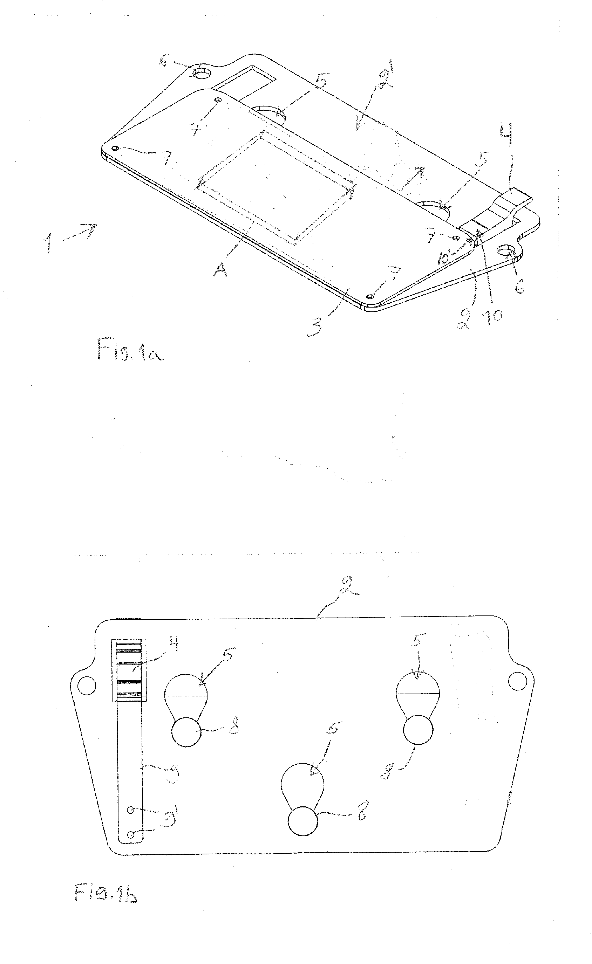

According to Figs. 1a and 1b, the snap-on locking means 1 according to the invention, with which a desired object A can be fixed to a first frame part 2 of the snap-on locking means 1 by snap-on locking (either directly or indirectly), as Fig. 1a presents, comprises the first frame part 2 comprising fixing apertures 5, which is plate-like, and the snap-on locking means 1 also comprises a second plate-like frame part 3 that can be fixed to the first frame part, which second frame part comprises fixing studs 8 that can rest, at least in the locking position, in the fixing apertures 5 of the first frame part. A pressable locking part 4 with spring action, such as a lever (thus the lever functions as the locking part), moving in an essentially orthogonal direction against the plane of the frame part is fitted to the first frame part 2, with which locking part relative movement between the first and the second frame part (2, 3) can be prevented and/or enabled.

A spring means 9 fixed to the first frame part 2 and to the locking part 4 (the fixing of the spring means is described with the reference number 9') is preferably strip-shaped and enables movement of the lever. The spring means can also be of a different type than what is presented in the figure.

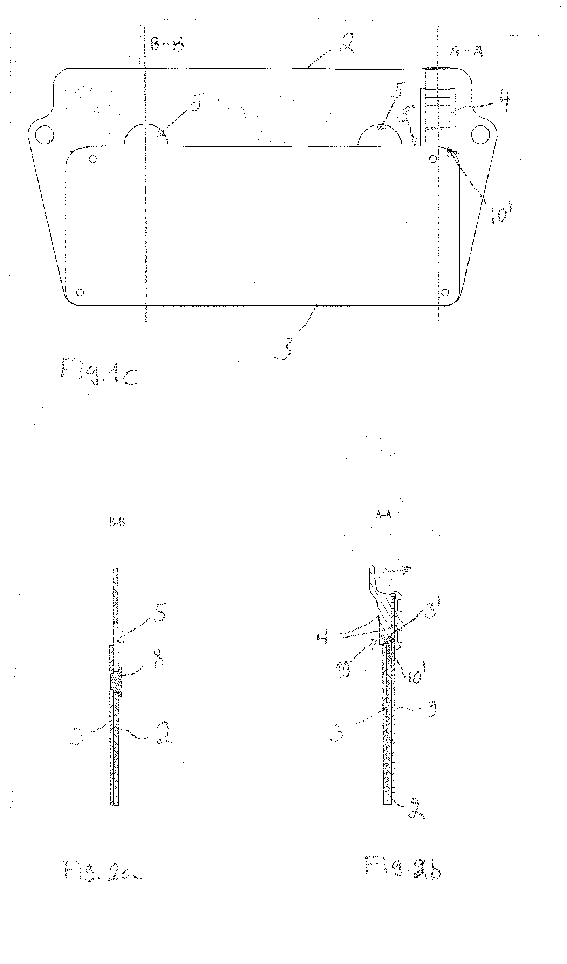

When the butt-end surface 10' of the locking part is in contact with the second frame part 3, relative movement between the first and the second frame part is prevented. Correspondingly, when the plane surface 10 of the locking part is on the same plane as the plane surface 2' of the first frame part, the second frame part can be detached from the first frame part, by moving it upwards in the direction indicated by the arrow, and in this case the second frame part slides on the surface 2' of the first frame part and it can be lifted off the first frame part, when the fixing studs 5 are at such a point in the fixing apertures 8 that they no longer rest on the edges (see Fig. 2a for more detail) of the fixing aperture(s).

Fig. 1a presents with the reference number 6 the fixing holes in the first frame part, and with the reference number 7 the fixing holes in the second frame part, from which a desired object (A) can be fixed, e.g. with screws or if desired in some other manner, to the second frame part 3.

Fig. 1c presents a front view of a snap-on locking means, in the locking position, and in it the top edge 3' of the second frame part 3, marked with an arrow, touches the butt-end surface of the locking part 4, in this case preventing movement of the second frame part 3 in relation to the first frame part. Correspondingly, when the locking part (lever) is pressed, the aforementioned surfaces do not touch each other, and movement between the first and the second frame part becomes possible.

Fig. 2a presents a section view from the point B-B of Fig. 1c, and it is seen in it how the fixing studs 8 are shaped so that they receive support from the first frame part 2 (the fixing studs go to some extent to behind the edge(s) of the aperture 5, to on top of the first frame part 2) and in this case the second frame part 3 cannot slide downwards in relation to the first frame part 2, nor can it be lifted off the first frame part 2.

Fig. 2b presents a section view from the point A-A of Fig. 1c, and it is seen in it how in the locking position the butt-end surface 10', which can be shaped e.g. to be sloping, of the locking part 4 touches the surface 3' of the second frame part 3 and in this way movement between the first and the second frame part 2, 3 is prevented.

Correspondingly, when the locking part 4 is pressed in the direction indicated by the arrow, the second frame part 3 can slide upwards the necessary distance along the surface 10, (in which case the fixing studs 8 are able to come out of the aperture 5, see e.g. Fig. 1b) the first and the second frame part can be detached from each other.

It is obvious to the person skilled in the art that the different embodiments of the invention are not limited solely to the examples described above, and that they may therefore be varied within the scope of the claims presented below.

In the solution according to the invention the fixing studs can be e.g. screwed or welded to the second frame part, or, alternatively, fixed directly to the object that it is desired to fix to the first frame part, in which case a second frame part is not necessarily needed at all.

In the solution according to the invention the fixing studs are preferably T-shaped in their cross-section, or conical, but they can be also of some other model. In the solution according to the invention the spring means can be of metal, plastic or composite material. In the solution according to the invention any suitable object whatsoever can be fixed to the second frame part.

## Claims

1. Snap-on locking means (1), for fixing a desired object (A) by snap-on locking to the frame part (2) of the snap-on locking means **characterized in that** a first frame part (2) comprising fixing apertures (5) is plate-like, and that the snap-on locking means comprises a second plate-like frame part (3) that can be fixed to the first frame part, which second frame part comprises fixing studs (8) that can rest, at least in the locking position, in the fixing apertures (5) of the first frame part, and that a pressable locking part (4) with spring action, such as a lever, moving in an essentially orthogonal direction against the plane of the frame part is fitted to the frame part, with which locking part relative movement between the first and the second frame part (2, 3) can be prevented and/or enabled.

2. Snap-on locking means according to claim 1, **characterized in that** a spring means (9) is fixed to the first frame part (2) and to the locking part (4), which spring means is strip-shaped and enables movement of the lever.

3. Snap-on locking means according to claim 1, **characterized in that** the fixing apertures (5) widen or narrow in the height direction of the first frame part (2).

4. Snap-on locking means according to claim 1, **characterized in that** when the butt-end surface (10') of the lever is in contact with the second frame part, relative movement between the first and the second frame part is prevented.

5. Snap-on locking means according to claim 1, **characterized in that** when the plane surface (10) of the lever is on the same plane as the plane surface (2') of the first frame part, the second frame part can be detached from the first frame part.

6. Snap-on locking means according to claim 1, **characterized in that** the fixing studs are T-shaped in their cross-section.

7. Snap-on locking means according to claim 2, **characterized in that** the spring means is of metal, plastic or composite material.
